# EUROPEAN PATENT SPECIFICATION

(11) **EP 3 670 972 B1**
(45) Date of publication and mention of the grant of the patent: **07.07.2021**
(21) Application number: 19216139.6
(22) Date of filing: 13.12.2019
(51) Int. Cl.: F16H 61/30, F16H 63/24, F16H 63/30, F16H 63/34, F16H 61/00

(54) **HYDRAULIC OPERATING APPARATUS FOR THE OPERATION OF ACTUATING ELEMENTS IN A MOTOR VEHICLE TRANSMISSION**
HYDRAULISCHE BETÄTIGUNGSVORRICHTUNG ZUM BETRIEB VON BETÄTIGUNGSELEMENTEN IN EINEM KRAFTFAHRZEUGGETRIEBE
APPAREIL DE COMMANDE HYDRAULIQUE POUR FAIRE FONCTIONNER DES ÉLÉMENTS D'ACTIONNEMENT DANS UNE TRANSMISSION DE VÉHICULE À MOTEUR

(30) Priority: 19.12.2018 DE 102018009852
(43) Date of publication of application: 24.06.2020
(73) Proprietor: FTE automotive GmbH, 96106 Ebern (DE)
(72) Inventor: STÖSSEL, Roland, D-96106 Ebern (DE); STÖHR, Reinhold, D-96106 Ebern (DE)
(74) Representative: Cardon, Nicolas

(56) References cited:
- EP-A2- 2 543 891
- DE-A1- 10 308 216
- DE-A1-102013 008 956
- DE-T2- 60 124 444

## Description

### TECHNICAL FIELD

The present invention relates to a hydraulic operating apparatus for the operation of actuating elements in a motor vehicle transmission, as per the preamble of patent Claim 1.

Such operating apparatuses are very widely used inter alia in modern utility vehicles, such as heavy goods vehicles and buses, where it is sought, in automated manual transmissions (AMT), double-clutch or multiple-clutch transmissions (DCT) or separable transfer boxes and differential transmissions, to operate transmission actuating elements, such as shift forks and shift sleeves, with or without synchronization means, and possibly dry-running or wet-running friction clutches, with the greatest possible flexibility and lowest possible friction and with a small structural space requirement.

### PRIOR ART

The document EP 2 754 911 A1 (Figure 1), which forms the preamble of patent Claim 1, has disclosed a hydraulic operating apparatus for the operation of a friction clutch and of transmission actuating elements for gear ratio or shift gutter selection in an automated motor vehicle manual transmission. In the case of this prior art, a power unit is provided, which, to generate a hydraulic pressure, has a pump which can be driven by means of an electrical pump drive in order to convey or displace hydraulic fluid. Furthermore, the known operating apparatus comprises a transmission actuating portion which is connected hydraulically to the power unit and which has a multiplicity of transmission actuating cylinders, the pistons of which are operatively connected to the transmission actuating elements. Furthermore, the operating apparatus has a clutch actuating portion with a clutch actuating cylinder which is hydraulically connected to the power unit and the piston of which is operatively connected to the friction clutch. Finally, a control unit is provided, which is electrically connected to the pump drive and to control elements for the transmission actuating portion and the clutch actuating portion.

In this prior art, it is furthermore the case that the pistons of the actuating cylinders can be hydraulically acted on opposite sides, wherein each piston as control element is functionally assigned a dedicated arresting device with a blocking element. The blocking element of each arresting device is spring-preloaded into a blocking position, in which the blocking element prevents a movement of the respective piston, and can be moved from the blocking position counter to the spring preload into a release position, in which the blocking element permits a movement of the respective piston, by means of an actuator, which can be electrically activated by means of the control unit, of the corresponding arresting device. Here, the direction of rotation of the pump drive and thus the pumping direction of the pump in the power unit is reversible in order to hydraulically act on the pistons of the actuating cylinders on one or the other side, depending on the pumping direction, for an operation or actuation movement. Here, the control unit coordinates the electric activation of the pump drive and of the actuators of the arresting devices in order to actuate the connected transmission actuating elements, or disengage or engage the friction clutch.

In the case of such an operating apparatus, it is thus the case that multiple actuating cylinders are used, which are connected via pressure circuits, which are normally composed of freely displaceable pipe and/or hose lines, to the power unit, that is to say the pressure generator. Since hydraulic fluids (such as for example oil or brake fluid in the present case) are incompressible, the pressure acting on the hydraulic fluid in the respective pressure circuit has no influence on its volume and thus on the transmission behaviour of the hydraulic fluid in the pressure circuit. As a result, it is also possible for high forces to be transmitted uniformly via the hydraulic fluid in the respective pressure circuit, such that, by means of the actuating cylinders that are hydraulically connected to the respective pressure circuit, exact actuating movements for the clutch engagement and shift processes can be effected.

However, if air bubbles are enclosed in such a hydraulic system, then the transmission behaviour changes or deteriorates. The enclosed air is specifically a compressible gas mixture which, with increasing pressure, is compressed and acts in the manner of a spring. A non-ventilated hydraulic system thus exhibits a certain "softness" or flexibility which must be eliminated after an initial filling with hydraulic fluid, during maintenance work and possibly during operation, by ventilating the pressure circuits. Only then is it possible, by means of a displacement of a defined hydraulic volume in the hydraulic system, to effect an equal exact actuating movement at the actuating cylinders.

Simple hydraulic systems with only one actuating cylinder can normally be easily ventilated by hand. For this purpose, a ventilation valve is generally provided at a high point of the hydraulic system, which ventilation valve can be manually opened as required in order to produce a connection between the hydraulic system and the surroundings. Via this connection, the air present in the hydraulic system can then escape to the surroundings. In the case of a multi-circuit operating apparatus with multiple actuating cylinders, such manual ventilation is however associated with considerable outlay, specifically both in terms of apparatus and with regard to handling, especially since the operating apparatus is often accessible only with difficulty, for example if it is situated in the transmission. The document EP 2 754 911 A1 however does not specify details regarding the ventilation of the operating apparatus.

Patent document EP 2 543 891 A2 also discloses a hydraulic operating apparatus for the operation of actuating elements in a motor vehicle transmission, however without specifying details regarding the ventilation of the operating apparatus.

### PROBLEM

The problem addressed by the invention is that of creating a hydraulic operating apparatus for the operation of actuating elements in a motor vehicle transmission, in the case of which adequate ventilation is ensured in the simplest possible manner.

### PRESENTATION OF THE INVENTION

Said problem is solved by means of a hydraulic operating apparatus for the operation of actuating elements in a motor vehicle transmission having the features of patent Claim 1. The subclaims relate to advantageous embodiments of the invention.

In the case of a hydraulic operating apparatus for the operation of actuating elements in a motor vehicle transmission, having a multiplicity of piston-cylinder arrangements which have in each case one actuating piston which is operatively connectable to an actuating element and which can be hydraulically acted on a first side and on a second side by means of in each case one associated pressure space, wherein each piston-cylinder arrangement is assigned a control device which permits or prevents an actuating movement of the respective actuating piston in a first direction or in an opposite, second direction, and wherein the pressure spaces on the first side of the actuating pistons are hydraulically connected to one another via a common first pressure line, whereas the pressure spaces on the second side of the actuating pistons are hydraulically connected to one another via a common second pressure line; according to the invention, each pressure line is assigned at least one ventilation valve with an exit for air, wherein the exits of the ventilation valves are connected to a common ventilation line.

In other words, the operating apparatus has multiple double-acting piston-cylinder arrangements, the actuating pistons of which can perform actuating movements to two sides, depending on which side they are subjected to pressure from and whether they are released or held fixed by the respectively associated control device. Here, the pressure spaces of in each case one side of the piston-cylinder arrangements are hydraulically connected to one another, such that only one pressure circuit is required for each side, and the operating apparatus can be operated for example by means of only one reversible pump, to the pump connections of which the piston-cylinder arrangements are, by means of their pressure spaces, connected in parallel.

Through the provision of at least one ventilation valve in each of the hydraulic lines that hydraulically connect the pressure spaces of one side to one another, the operating apparatus designed according to the invention can be reliably ventilated. It is thus possible with little outlay in terms of apparatus to ventilate all of the pressure spaces of a multiplicity of piston-cylinder arrangements. Measures for separate ventilation of the individual pressure spaces can advantageously be omitted.

Since the respective ventilation valve is assigned to the corresponding pressure line, the pressure spaces of the piston-cylinder arrangements can be easily ventilated even if the piston-cylinder arrangements are situated at a location which is accessible only with difficulty, such as for example within the transmission.

By virtue of the air exits of the individual ventilation valves being merged in a common ventilation line, the outlay in terms of apparatus is yet further reduced. Furthermore, this merging permits the discharge of the oil-laden exit air at a central location.

Since it is furthermore the case according to the invention that the ventilation valves are assigned to the operating apparatus, ventilation at the power unit that has the pump(s), which for this purpose is commonly located higher than the operating apparatus in order that enclosed air can rise in the direction of the power unit, can be omitted. The embodiment according to the invention of the operating apparatus thus also offers not least the advantage that the operating apparatus can be arranged at a higher location than the power unit. In other words, greater flexibility exists as regards the positioning of the power unit, which can thus be positioned for example at a location where the available structural space is less restricted.

It is basically possible for the individual pressure spaces of the piston-cylinder arrangements to be connected to pressure lines or pipes which are separate from the piston-cylinder arrangements. In particular with regard to low outlay in terms of apparatus and the smallest possible structural space requirement, however, an embodiment of the operating apparatus is, by contrast, preferred in which each piston-cylinder arrangement has two cylinder housings which delimit the respective pressure spaces and which have in each case one hydraulic inlet and one hydraulic outlet for the pressure space, wherein a part of the first pressure line is formed by a series arrangement of cylinder housings on the first side of the actuating pistons, whereas a part of the second pressure line is formed by a series arrangement of cylinder housings on the second side of the actuating pistons.

In one specific embodiment of such a concept, which advantageously requires no additional lines or channels running in labyrinthine fashion, in the series arrangement of cylinder housings, the hydraulic inlet of a respective first cylinder housing forms a common inlet connection for the respective series arrangement, whereas the hydraulic outlet of a respective final cylinder housing forms a common end connection for the respective series arrangement, wherein, between the hydraulic inlet of the first cylinder housing and the hydraulic outlet of the final cylinder housing, the hydraulic outlet of each cylinder housing is connected, preferably connected by plug connection, to the hydraulic inlet of a subsequent cylinder housing, in particular in order to simplify the installation process. Such an embodiment permits the use of cylinder housings of identical form, such that, in each case depending on the number of gear ratios to be shifted in the transmission that is respectively to be operated, it is possible for different series arrangements of cylinder housings to be assembled in the manner of a modular system. This is particularly economical because cylinder housings can be produced inexpensively as identical parts in high unit quantities.

In principle, the ventilation valve may for example be formed as a spring-preloaded ball seat valve. The ventilation valve is however preferably a disc valve, having a disc-shaped valve body which bears under spring loading against a valve seat. This advantageously permits, with suitable material selection, the combination of spring and sealing surface in only one part, which is of compact construction and is inexpensive to produce.

In one preferred embodiment of the ventilation valve, the valve seat may have a central passage, which communicates with the respective pressure line, and an annular groove which surrounds the passage and which is connected to the passage via a connecting groove, wherein the valve body is composed of a resiliently elastic material, covers the passage, the connecting groove and the annular groove, and is capable of lifting off from the annular groove.

Such a valve embodiment firstly offers the advantage of return flow or outflow prevention, which - in particular if the power unit/pump is situated lower than the operating apparatus - prevents air from being drawn in, or the hydraulic system running empty, in the unpressurized state. Secondly, through suitable dimensioning of the cross section of the connecting groove, it is advantageously possible to influence the switching behaviour of the operating apparatus, wherein the piston-cylinder arrangements have a "harder" or "softer", or faster or slower, action on the connected actuating elements in a manner dependent on the groove cross section.

In one preferred embodiment of the operating apparatus, the ventilation valve is arranged at a highest point of the respective pressure line, such that it is advantageously possible to utilize the effect that air inclusions or bubbles rise upward. A lower arrangement of the ventilation valve is duly also possible in principle, but then, a greater throughflow is required in order to reliably ventilate the respective pressure line.

In particular with regard to fast ventilation during an initial filling of the abovementioned series arrangement of cylinder housings, it is preferable if the ventilation valve is provided at the common end connection for the series arrangement. This also simplifies the modular embodiment of the operating apparatus with cylinder housings from a modular system, because the individual cylinder housings do not individually need to be designed to receive a ventilation valve or with a connection for a ventilation valve.

In a preferred refinement of the operating apparatus, the piston-cylinder arrangements are mounted on a first carrier plate, wherein the ventilation line runs on a side of the first carrier plate which is averted from the piston-cylinder arrangements. A course of the ventilation line on the "wet" side, facing toward the piston-cylinder arrangements, of the first carrier plate is duly likewise conceivable. However, in a repair or maintenance situation, the accessibility to the ventilation line and the ventilation valves is better in the preferred embodiment.

With regard to inexpensive and straightforward installation, it is furthermore preferable if the ventilation line is fastened to the first carrier plate on that side of the first carrier plate which is averted from the piston-cylinder arrangements. In this way, a preassembled unit is advantageously created which already bears the ventilation line during the mounting on the transmission.

Furthermore, in one expedient embodiment, the ventilation line may have at least two line portions, of which at least one line portion connects the exits of the ventilation valves.

That end of the ventilation line which is remote from the ventilation valves may for example be equipped with a screw connection or a crimp connection. In particular with regard to simple and fast installation even in the case of restricted space conditions, however, an embodiment is preferable in which the ventilation line has a plug connection at an end side. The first pressure line and the second pressure line may each also have a plug connection, which is provided on that side of the first carrier plate which is averted from the piston-cylinder arrangements, which likewise promotes simple installation. It is particularly advantageous here if the plug connection of the ventilation line and the plug connections of the pressure lines are arranged at one and the same edge of the first carrier plate. This reduces the space required for the installation process to a minimum.

In particular with regard to good electrical accessibility and the possibility of omitting cumbersome sealing measures, it is furthermore preferable if the control devices are arranged on that side of the first carrier plate which is averted from the piston-cylinder arrangements, wherein the ventilation line runs adjacent to the control devices, which in turn offers the advantage of a small structural space requirement.

In a proven embodiment, it is finally possible for the control device to be an arresting device which has a blocking element, which blocking element is spring-preloaded into a blocking position which prevents a movement of the actuating piston, and which blocking element can be moved by means of an electrically activatable actuator from the blocking position counter to the spring preloaded into a release position which permits a movement of the actuating piston. This concept is distinguished by its robustness and also by the fact that cumbersome valve arrangements for controlling the movement of the actuating elements are not required.

### BRIEF DESCRIPTION OF THE DRAWINGS

The invention will be discussed in more detail below on the basis of a preferred exemplary embodiment and with reference to the appended, in some cases schematic drawings, in which, for the sake of simplicity of the illustration, elastomer or elastic parts are illustrated in the non-deformed state. In the drawings:
- Figure 1: shows a perspective view of a hydraulic operating apparatus for the operation of actuating elements in a motor vehicle transmission according to a preferred exemplary embodiment of the invention in the non-installed state obliquely from above/front left, in a view directed onto that side of the operating apparatus which is averted from a flange surface of the operating apparatus and on which, in particular, control devices of the operating apparatus are arranged;
- Figure 2: shows a perspective view of the operating apparatus as per Figure 1 in the non-installed state obliquely from below/front right, in a view directed onto piston-cylinder arrangements and the flange surface of the operating apparatus, by means of which the operating apparatus can be flange-mounted on a partition of a transmission housing of the motor vehicle transmission;
- Figure 3: shows a perspective exploded illustration of the operating apparatus as per Figure 1 obliquely from above/front left, for the purposes of better illustrating a first carrier plate, which bears the piston-cylinder arrangements, a second carrier plate, which bears the control devices, and an interposed circuit board as electrical connecting unit for the electrical contacting and activation of the control devices;
- Figure 4: shows a perspective view of the second carrier plate of the operating apparatus as per Figure 1 obliquely from below/rear left, in a view directed onto the circuit board attached to the bottom side of the second carrier plate;
- Figure 5: is a perspective exploded illustration of the piston-cylinder arrangements of the operating apparatus as per Figure 1 obliquely from above/rear left, for the purposes of better illustrating actuating pistons and cylinder housing types of the piston-cylinder arrangements;
- Figure 6: shows a plan view of the operating apparatus as per Figure 1 from above in Figure 1;
- Figure 7: shows a sectional view, on an enlarged scale in relation to Figure 6, of the operating apparatus as per Figure 1 in accordance with the section profile line VII-VII in Figure 6, wherein the sectional view has been rotated through 180° in the plane of the drawing in order to illustrate the installation position of the operating apparatus;
- Figure 8: shows a sectional view, on a yet further considerably enlarged scale in relation to Figure 7, of the operating apparatus as per Figure 1 in accordance with the detail circle VIII in Figure 7, for the purposes of better illustrating a ventilation valve of the operating apparatus;
- Figure 9: shows a plan view of a valve seat of the ventilation valve of the operating apparatus as per Figure 1 in a viewing direction corresponding to the arrow IX in Figure 8;
- Figure 10: shows a sectional view, corresponding in terms of scale to Figure 6, of the operating apparatus as per Figure 1 in accordance with the section profile line X-X in Figure 6;
- Figure 11: shows a sectional view, again corresponding in terms of scale to Figure 6, of the operating apparatus as per Figure 1 in accordance with the doubly stepped section profile line XI-XI in Figure 6;
- Figure 12: shows a sectional view, again corresponding in terms of scale to Figure 6, of the operating apparatus as per Figure 1 in accordance with the section profile line XII-XII in Figure 6; and
- Figure 13: shows a sectional view, corresponding in terms of scale to Figure 12, of the operating apparatus as per Figure 1 in accordance with the section profile line XIII-XIII in Figure 12.

### DETAILED DESCRIPTION OF THE EXEMPLARY EMBODIMENT

In the figures, the reference designation 10 generally denotes a hydraulic operating apparatus for the operation of actuating elements 12 in a motor vehicle transmission. The operating apparatus 10 has a multiplicity of piston-cylinder arrangements 14.1, 14.2, 14.3, 14.4, 14.5, which each have an actuating piston 16.1, 16.2, 16.3, 16.4, 16.5 that is operatively connectable to an actuating element 12. Each actuating piston 16.1, 16.2, 16.3, 16.4, 16.5 can be hydraulically acted on a first side and on a second side by means of in each case one associated pressure space 18.1, 18.1', 18.2, 18.2', 18.3, 18.3', 18.4, 18.4', 18.5, 18.5'.

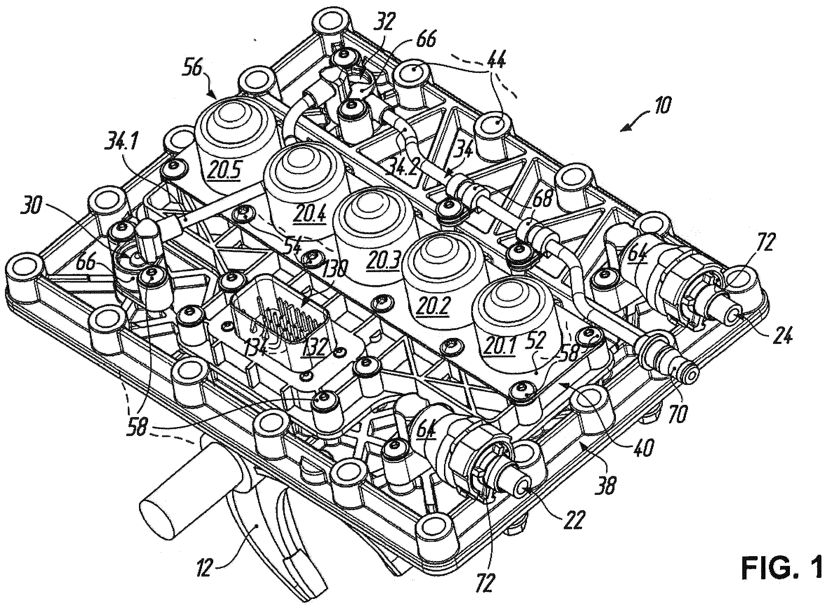

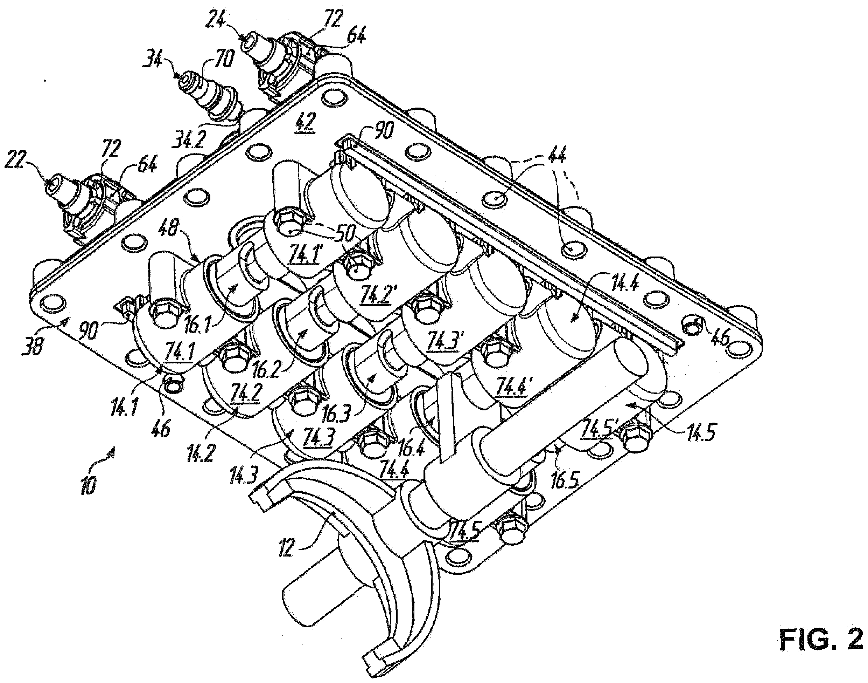

In the illustrated exemplary embodiment, for an automated heavy goods vehicle manual transmission (AMT) with eight forward gear ratios and two reverse gear ratios, a total of five piston-cylinder arrangements 14.1, 14.2, 14.3, 14.4, 14.5 is provided. As actuating element 12, Figures 1 and 2 show by way of example a shift fork on a shift shaft, which is mechanically connected to the actuating piston 16.4 of the piston-cylinder arrangement 14.4 as per Figure 2. Corresponding actuating elements are also assigned to the other piston-cylinder arrangements 14.1, 14.2, 14.3, 14.5, but are not shown in the figures for the sake of better clarity.

Each piston-cylinder arrangement 14.1, 14.2, 14.3, 14.4, 14.5 is furthermore assigned a control device 20.1, 20.2, 20.3, 20.4, 20.5, which permits or prevents an actuating movement of the respective actuating piston 16.1, 16.2, 16.3, 16.4, 16.5 in a first direction or an opposite, second direction. Furthermore, the pressure spaces 18.1, 18.2, 18.3, 18.4, 18.5 on the first side of the actuating pistons 16.1, 16.2, 16.3, 16.4, 16.5 are hydraulically connected to one another by a common first pressure line 22, whereas the pressure spaces 18.1', 18.2', 18.3', 18.4', 18.5' on the second side of the actuating pistons 16.1, 16.2, 16.3, 16.4, 16.5 are hydraulically connected to one another via a common second pressure line 24.

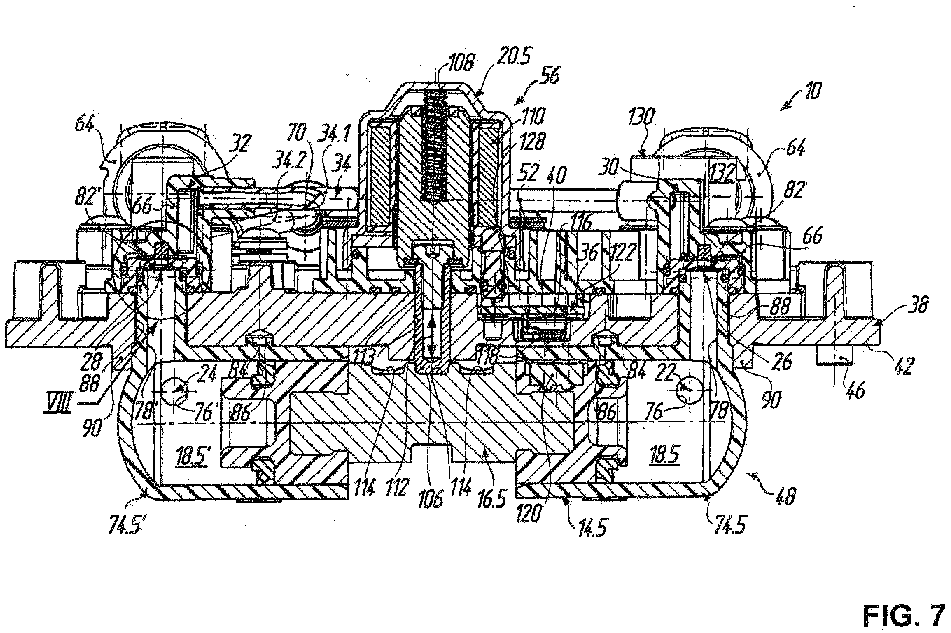

As will also be discussed in detail below, various special features of the operating apparatus 10 according to the illustrated exemplary embodiment exist in relation to the prior art discussed in the introduction, in particular in the following two aspects (i and ii): firstly (i), as can be seen most clearly in Figure 7, each pressure line 22, 24 is assigned at least one ventilation valve 26, 28 with an exit 30, 32 for air, wherein the exits 30, 32 of the ventilation valves 26, 28 are connected to a common ventilation line 34.

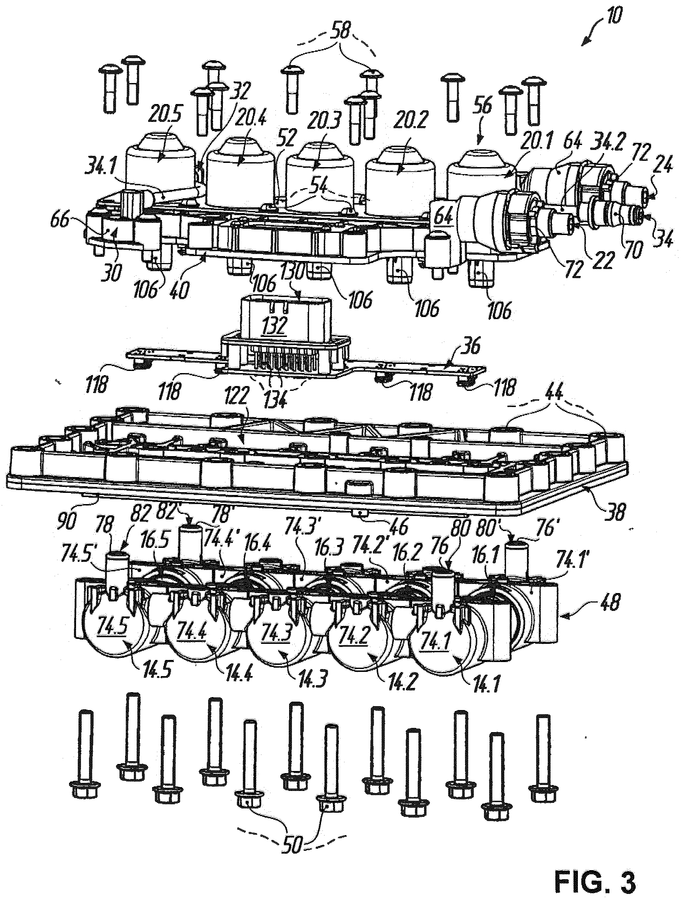

Secondly (ii), an electrical connecting unit - in this case in the form of a circuit board 36 - is provided for the electrical contacting and activation of the control devices 20.1, 20.2, 20.3, 20.4, 20.5, which electrical connecting unit is arranged in a particular manner, as can be seen most clearly in Figure 3. Whereas the piston-cylinder arrangements 14.1, 14.2, 14.3, 14.4, 14.5 are mounted on a first carrier plate 38 of the operating apparatus 10, the control devices 20.1, 20.2, 20.3, 20.4, 20.5 are mounted on a second carrier plate 40 that differs from the first carrier plate. The two carrier plates 38, 40 are connected to one another, wherein the circuit board 36 is arranged between the first carrier plate 38 and the second carrier plate 40.

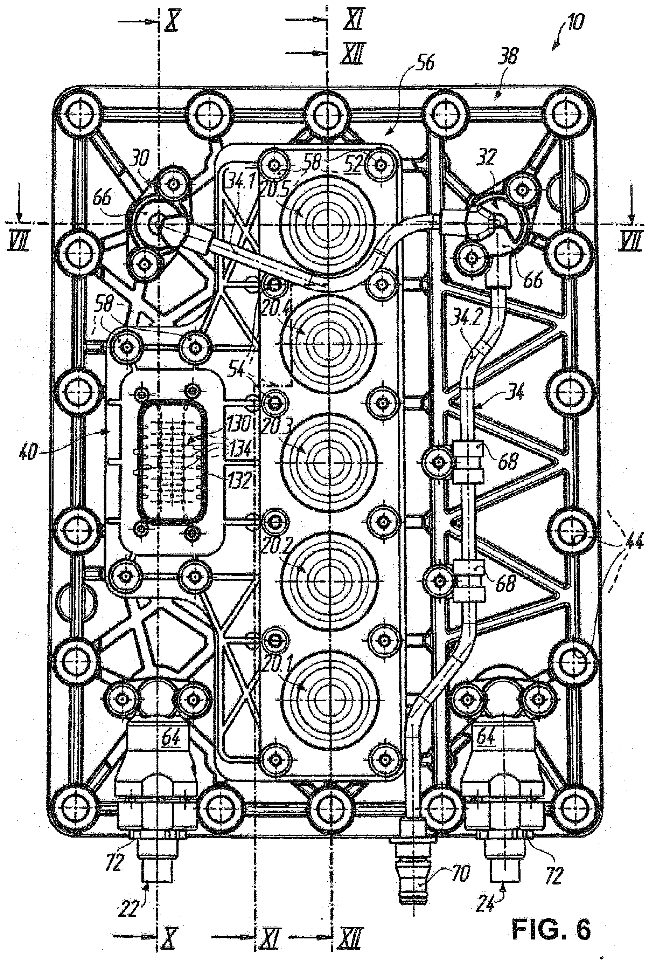

As illustrated in Figures 3 to 5, the operating apparatus 10 is of modular construction, wherein the first carrier plate 38, which is metallic and preferably composed of a light metal alloy, forms a base, by means of which the operating apparatus 10 can be flange-mounted on a transmission housing (not shown). For this purpose, the first carrier plate 38, which is substantially rectangular as seen in plan view (Figure 6), has a flange surface 42 (see in particular Figure 2) on its bottom side. At its edge, the first carrier plate 38 is equipped in encircling fashion with fastening holes 44 which, in a state in which the operating apparatus 10 is mounted on the transmission housing, are extended through by fastening bolts (not illustrated) which are screwed into threaded bores in the transmission housing in order to pull the operating apparatus 10 with its flange surface 42 against the transmission housing.

Here, centring sleeves 46 (see in particular Figure 2) which are provided in the region of the flange surface 42 position the first carrier plate 38 relative to the transmission housing.

Figures 3 and 7 illustrate the installed position of the operating apparatus 10, that is to say in the state in which the operating apparatus 10 is mounted on the transmission housing, the first carrier plate 38 extends substantially in a horizontal direction. The individual piston-cylinder arrangements 14.1, 14.2, 14.3, 14.4, 14.5 are combined, in a manner that is yet to be described, to form a cylinder assembly 48, which is fitted from below onto the first carrier plate 38 and fastened by means of a multiplicity of fastening bolts 50 (see Figure 3). In the state in which the operating apparatus 10 is mounted on the transmission housing, the cylinder assembly 48 projects through an opening of the transmission housing into the transmission housing, that is to say is situated in an oil-wetted region of the transmission housing.

By contrast, the individual control devices 20.1, 20.2, 20.3, 20.4, 20.5 are, as per in particular Figure 1, fastened with the aid of a holding plate 52 and fastening bolts 54 to the second carrier plate 40, which is formed, in particular injection moulded, from plastic. The control devices 20.1, 20.2, 20.3, 20.4, 20.5 are thus combined on the second carrier plate 40 to form a control assembly 56, which is fitted from above onto the first carrier plate 38 and fastened by means of a multiplicity of fastening bolts 58 (again, see Figure 3).

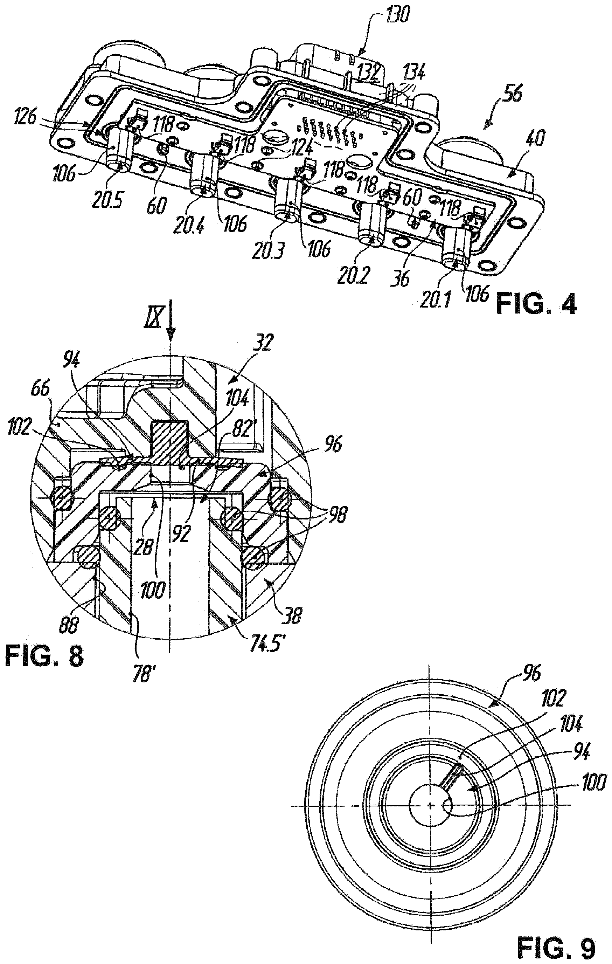

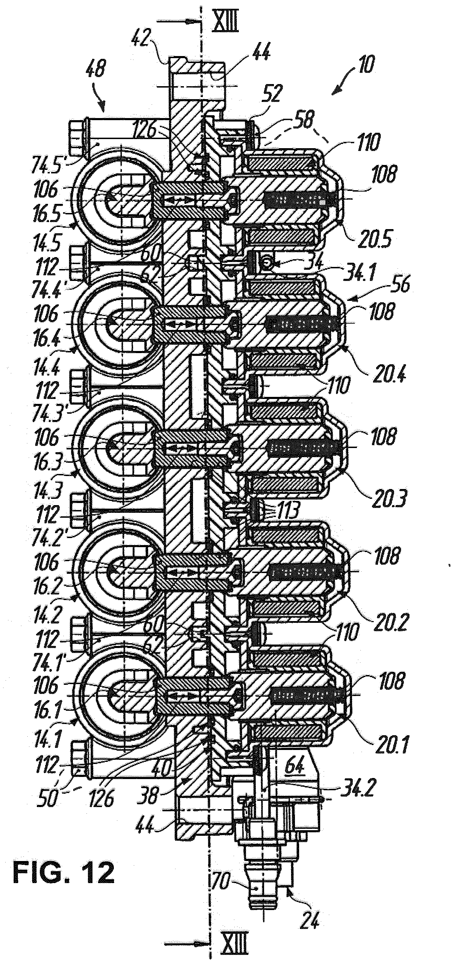

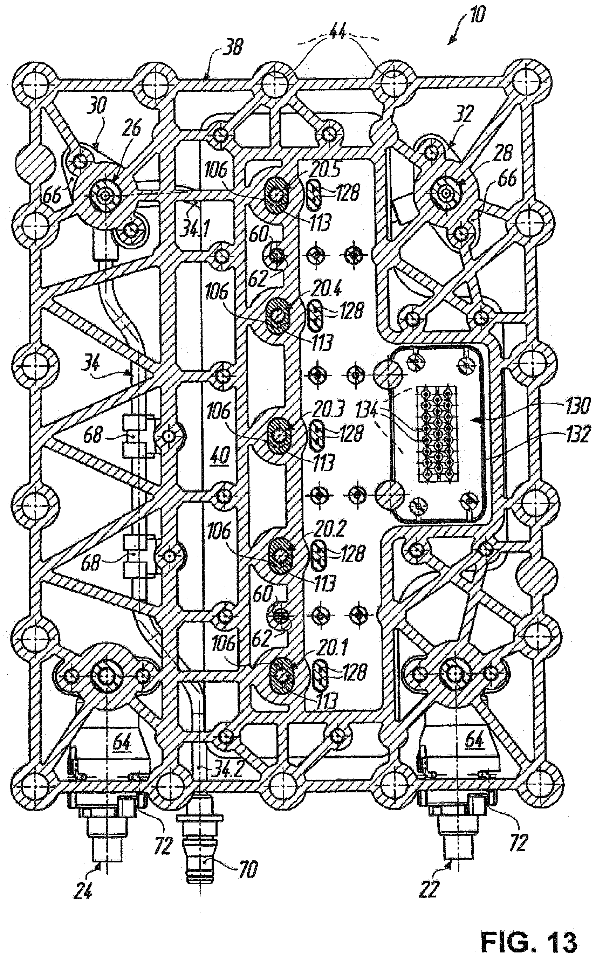

As per Figures 12 and 13, the second carrier plate 40 is in this case aligned relative to the first carrier plate 38 by means of centring projections 60 which are provided on the second carrier plate 40 (also see Figure 4) and which engage into associated centring apertures 62 in the first carrier plate 38. In the state in which the operating apparatus 10 is mounted on the transmission housing, the control assembly 56 is thus situated outside the transmission housing, that is to say in a region which is "dry with respect to oil".

The hydraulic part of the operating apparatus 10 is completed by connection housings 64, which are screwed onto the top side of the first carrier plate 38, that is to say in the region that is "dry with respect to oil", for the pressure lines 22, 24, by the valve housings 66, which have exits 30 and 32 respectively, for the ventilation valves 26, 28, and by the common ventilation line 34. The latter is likewise fastened to the first carrier plate 38 on that side of the first carrier plate 38 which is averted from the piston-cylinder arrangements 14.1, 14.2, 14.3, 14.4, 14.5, for which purpose, as per Figure 1, holders 68 are provided which are screwed to the first carrier plate 38.

It can also be clearly seen in Figures 1, 6 and 7 that the ventilation line 34 runs adjacent to the control devices 20.1, 20.2, 20.3, 20.4, 20.5, that is to say substantially in a plane with the control devices 20.1, 20.2, 20.3, 20.4, 20.5, which, like the ventilation line 34, are arranged on that side of the first carrier plate 38 which is averted from the piston-cylinder arrangements 14.1, 14.2, 14.3, 14.4, 14.5. In the exemplary embodiment illustrated, the ventilation line 34 has two line portions 34.1, 34.2, of which one line portion, specifically the line portion 34.1, connects the exits 30, 32 of the ventilation valves 26, 28. At an end side, the ventilation line 34 is equipped with a plug connection 70 (plug).

As per Figures 1 to 3 and 10, the first pressure line 22 and the second pressure line 24 also each have a plug connection 72 (socket), which plug connection is provided on that side of the first carrier plate 38 which is averted from the piston-cylinder arrangements 14.1, 14.2, 14.3, 14.4, 14.5 and which plug connection is formed by the respective connection housing 64. In particular, the arrangement is such that the plug connection 70 of the ventilation line 34 and the plug connections 72 of the pressure lines 22, 24 are situated at one and the same edge of the first carrier plate 38.

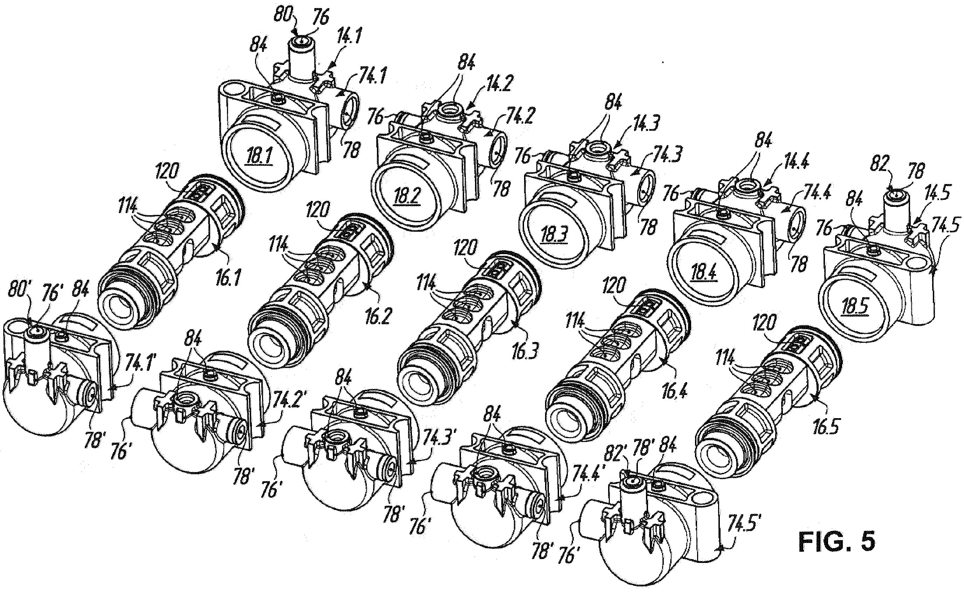

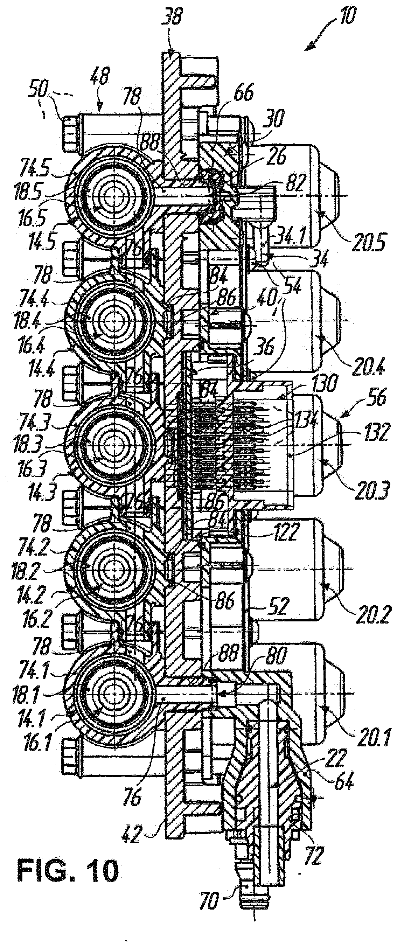

Further details of the cylinder assembly 48 will now emerge in particular from Figure 5. According thereto, each piston-cylinder arrangement 14.1, 14.2, 14.3, 14.4, 14.5 has two cylinder housings 74.1, 74.1', 74.2, 74.2', 74.3, 74.3', 74.4, 74.4', 74.5, 74.5' that delimit the respective pressure spaces 18.1, 18.1', 18.2, 18.2', 18.3, 18.3', 18.4, 18.4', 18.5, 18.5'. Each of the cylinder housings has a hydraulic inlet 76 or 76' and a hydraulic outlet 78 or 78' for the respective pressure space 18.1, 18.1', 18.2, 18.2', 18.3, 18.3', 18.4, 18.4', 18.5, 18.5'. Here, one part of the first pressure line 22 is formed by a series arrangement of cylinder housings 74.1, 74.2, 74.3, 74.4, 74.5 on the first side of the actuating pistons 16.1, 16.2, 16.3, 16.4, 16.5, as illustrated in Figures 5 and 10, whereas one part of the second pressure line 24 is analogously formed by a series arrangement of cylinder housings 74.1', 74.2', 74.3', 74.4', 74.5' on the second side of the actuating pistons 16.1, 16.2, 16.3, 16.4, 16.5.

In the series arrangement of cylinder housings 74.1, 74.2, 74.3, 74.4, 74.5, 74.1', 74.2', 74.3', 74.4', 74.5', the hydraulic inlet 76, 76' of a respective first cylinder housing 74.1, 74.1' forms a common inlet connection 80, 80' for the respective series arrangement, whereas the hydraulic outlet 78, 78' of a respective final cylinder housing 74.5, 74.5' forms a common end connection 82, 82' for the respective series arrangement. Here, between the hydraulic inlet 76, 76' of the respective first cylinder housing 74.1, 74.1' and the hydraulic outlet 78, 78' of the respective final cylinder housing 74.5, 74.5', the hydraulic outlet 78, 78' of each cylinder housing 74.1, 74.2, 74.3, 74.4, 74.1', 74.2', 74.3', 74.4' is connected to the hydraulic inlet 76, 76' of a subsequent cylinder housing 74.2, 74.3, 74.4, 74.5, 74.2', 74.3', 74.4', 74.5'. In the exemplary embodiment illustrated, suitably sealed plug connections are provided (see also Figure 10) in order to simplify the assembly of the series arrangements. In this way, in the manner of a modular system, only three different cylinder housing types are required, wherein, in the present example, the cylinder housings 74.1, 74.5' (type 1) and 74.5, 74.1' (type 2) and 74.2, 74.3, 74.4, 74.2', 74.3', 74.4' (type 3) are respectively of identical form, and preferably injection-moulded from plastic.

For the positioning of the cylinder housings 74.1, 74.2, 74.3, 74.4, 74.5, 74.1', 74.2', 74.3', 74.4', 74.5' on the first carrier plate 38, each cylinder housing is, as per Figure 5, equipped with at least one positioning projection 84, which engages in an associated positioning aperture 86 of the first carrier plate 38, as shown in Figures 7 and 10. In the case of the respective outer cylinder housings 74.1, 74.1', 74.5, 74.5', positioning is also realized by means of the hydraulic inlet 76, 76' (cylinder housing 74.1, 74.1') or the hydraulic outlet 78, 78' (cylinder housing 74.5, 74.5') respectively, which engages respectively through an associated opening 88 in the first carrier plate 38 (again, see Figures 7 and 10). Furthermore, for the axial support of the cylinder housing 74.1, 74.2, 74.3, 74.4, 74.5, 74.1', 74.2', 74.3', 74.4', 74.5', stop rails 90 are formed integrally on the first carrier plate 38, as can be seen in particular in Figures 2 and 7.

As is furthermore shown in Figures 7 and 10, the ventilation valves 26, 28 are provided in each case at the common end connection 82, 82' of the respective series arrangement of cylinder housings 74.1, 74.2, 74.3, 74.4, 74.5 and 74.1', 74.2', 74.3', 74.4', 74.5' respectively. The ventilation valve 26 or 28 is thus arranged at a highest point of the respective pressure line 22, 24.

Details regarding the ventilation valves 26, 28 emerge from Figures 8 and 9, which show the ventilation valve 28 on an enlarged scale as an example for both ventilation valves 26, 28. Accordingly, the ventilation valves 26, 28 are each disc valves, with a disc-shaped valve body 92 which bears under spring loading against a valve seat 94. In the illustrated exemplary embodiment, the valve seat 94 is formed on an insert part 96 which, suitably sealed by means of O-rings 98, is inserted between the valve housing 66, the first carrier plate 38 and that end of the end connection 82' of the cylinder housing 74.5' which projects beyond the opening 88 in the first carrier plate 38 (see Figure 8).

Figure 9 shows the insert part 96 of the ventilation valve 28 separately in a plan view with a viewing direction corresponding to the arrow IX in Figure 8 in order to illustrate further details of the valve seat 94. Accordingly, the valve seat 94 has a central passage 100 communicating with the respective pressure line, in this case the second pressure line 24, and has an annular groove 102 surrounding the passage 100. The annular groove 102 is connected to the passage 100 via a radially running, straight connecting groove 104. The valve body 92 is composed of a resiliently elastic material and, as per Figure 8, covers the passage 100, the connecting groove 104 and the annular groove 102. As is also shown in Figure 8, the valve body 92 is, in the region of the annular groove 102, not clamped between the valve housing 66 and the insert part 96, such that the valve body 92 is capable of lifting off there, by way of its edge, from the annular groove 102.

It is thus clear to a person skilled in the art that the connecting groove 104 has a throttling action, which prevents a significant dissipation of pressure in the hydraulic fluid present in the end connection 82', but nevertheless readily allows enclosed air to pass from the end connection 82' to the exit 32, wherein the edge of the valve body 92 lifts off slightly from the valve seat 94. In the other direction, the disc-like valve body 92, owing to its elastic characteristics, prevents air from being drawn back out of the exit 32 into the end connection 82'.

To assist the ventilation of the hydraulic system that is thus effected, it is furthermore possible for the actuating pistons 16.1, 16.2, 16.3, 16.4, 16.5 of the piston-cylinder arrangements 14.1, 14.2, 14.3, 14.4, 14.5 to be moved back and forth by means of alternating pressurization of the respective pressure spaces 18.1, 18.1', 18.2, 18.2', 18.3, 18.3', 18.4, 18.4', 18.5, 18.5', as described in the earlier German patent application 10 2018 008 943.7 from the present applicant.

Further details regarding the identically formed control devices 20.1, 20.2, 20.3, 20.4, 20.5 of the control assembly 56 emerge in particular from Figures 7 and 12. The functional principle of these control devices is basically known from the document EP 2 543 891 A1 from the present applicant, to which reference is firstly expressly made at this juncture.

The control devices 20.1, 20.2, 20.3, 20.4, 20.5 are accordingly each an arresting device, which has a blocking element 106, which blocking element is preloaded by means of a spring 108 into a blocking position which prevents a movement of the respective actuating piston 16.1, 16.2, 16.3, 16.4, 16.5, and which blocking element can be moved by means of an electrically activatable actuator 110 (solenoid) from the blocking position counter to the spring preload into a release position, which permits a movement of the respective actuating piston 16.1, 16.2, 16.3, 16.4, 16.5. The movement of the corresponding blocking element 106 takes place here along a respective feed axis 112, which is denoted in Figures 7, 11 and 12 by a double arrow.

In a manner known per se, the blocking element 106, which extends in a closely fitting manner through complementarily shaped openings 113 in the first carrier plate 38 and in the second carrier plate 40 (see Figures 7, 12 and 13), can engage with detent action in associated apertures 114 of the respective actuating piston 16.1, 16.2, 16.3, 16.4, 16.5 in order to prevent a piston movement even in the event of pressure loading of the corresponding piston-cylinder arrangement 14.1, 14.2, 14.3, 14.4, 14.5. For this purpose, each actuating piston 16.1, 16.2, 16.3, 16.4, 16.5 has three apertures 114 which, as can be seen most clearly in Figures 5 and 7, are situated one behind the other along the piston axis. Whilst the in each case middle aperture 114 defines a neutral position of the respective actuating piston 16.1, 16.2, 16.3, 16.4, 16.5, the in each case outer apertures 114 predefine two different operating positions of the respective actuating piston 16.1, 16.2, 16.3, 16.4, 16.5.

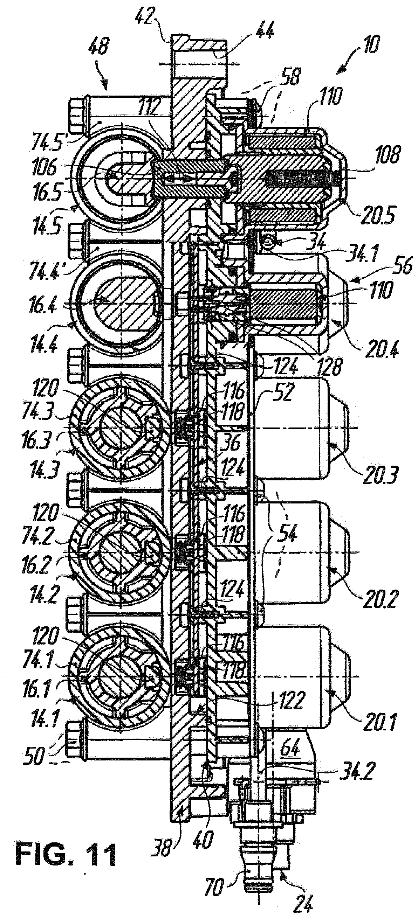

Furthermore, each piston-cylinder arrangement 14.1, 14.2, 14.3, 14.4, 14.5 is assigned a sensor arrangement 116 which, as per Figures 7 and 11, has a position detector 118, which is positionally fixed relative to the first carrier plate 38 and which is in this case a Hall sensor element (see also Figures 3 and 4), and a position encoder 120, which in this case is a magnet (see also Figure 5) and which, for the detection of the respective position of the actuating element 12, is operatively connected to the corresponding actuating piston 16.1, 16.2, 16.3, 16.4, 16.5. In the exemplary embodiment illustrated, provision is advantageously made whereby the electrical connecting unit, that is to say the circuit board 36, also electrically contacts the position detectors 118 of the sensor arrangements 116.

As illustrated in Figures 3, 7, 10 and 11, the first carrier plate 38 is equipped with an aperture 122 for receiving the circuit board 36. By contrast, the circuit board 36 is fastened to the second carrier plate 40, as can be seen in Figures 4 and 11, for which purpose a multiplicity of fastening bolts 124 is provided. In the installed state, the circuit board 36 extends, as per figures 7, 10 and 11, parallel to the first carrier plate 38. The circuit board 36 is thus also oriented transversely with respect to the feed axes 112 of the blocking elements 106 of the control devices 20.1, 20.2, 20.3, 20.4, 20.5 (see Figure 7).

In particular in Figures 4 and 12, it can furthermore be seen that the second carrier plate 40 is equipped with an integrated seal arrangement 126 which, between the first carrier plate 38 and the second carrier plate 40, seals off the aperture 122, which serves for receiving the circuit board 36, to the outside with respect to the surroundings and to the inside with respect to the openings 113 in the carrier plates 38, 40. The elastomer sealing beads of the seal arrangement 126 are in this case formed so as to encircle both the aperture 122 and the openings 113, as can be seen from Figure 4. As a result, the circuit board 36 is received in a very space-saving manner, and so as to be well protected against external influences, between the first carrier plate 38 and the second carrier plate 40.

As per Figures 7 and 11, the electrically activatable actuator 110 of each control device 20.1, 20.2, 20.3, 20.4, 20.5 is furthermore contacted with the circuit board 36 by means of contact pins 128, which are fixed in the circuit board 36 by means of a press-fit connection. Furthermore, in particular Figures 3, 4 and 10 illustrate that the control devices 20.1, 20.2, 20.3, 20.4, 20.5 are connected via the circuit board 36, as an electrical connecting unit, to an electrical interface 130 which is integrated in the operating apparatus 10. A corresponding situation applies for the position detectors 118 of the sensor arrangements 116, such that the control devices 20.1, 20.2, 20.3, 20.4, 20.5 and the position detectors 118 of the sensor arrangements 116 are jointly contactable via the electrical interface 130.

As can be clearly seen in Figures 1, 4, 6 and 10, the electrical interface 130 has a plug connection 132 attached to the second carrier plate 40 of the operating apparatus 10. The plug connection 132 runs transversely with respect to the second carrier plate 40, in a direction away from the first carrier plate 38, and is thus likewise situated on that side of the operating apparatus 10 which is "dry with respect to oil". Finally, the plug connection 132 of the electrical interface 130 is also, for the joint contacting of the control devices 20.1, 20.2, 20.3, 20.4, 20.5 and of the position detectors 118 of the sensor arrangements 116 as per the figures, equipped with contact pins 134 which are fixed in the circuit board 36 by means of a press-fit connection.

As otherwise regards the functioning of the above-described operating apparatus 10 during the operation of the individual actuating elements 12 in the motor vehicle transmission, reference is finally expressly made to the document EP 2 754 911 A1 from the present applicant, which describes, by way of example, typical clutch engagement and shift processes in a correspondingly automated motor vehicle transmission.

### LIST OF REFERENCE DESIGNATIONS

- 10: Operating apparatus
- 12: Actuating element
- 14.1: Piston-cylinder arrangement
- 14.2: Piston-cylinder arrangement
- 14.3: Piston-cylinder arrangement
- 14.4: Piston-cylinder arrangement
- 14.5: Piston-cylinder arrangement
- 16.1: Actuating piston
- 16.2: Actuating piston
- 16.3: Actuating piston
- 16.4: Actuating piston
- 16.5: Actuating piston
- 18.1, 18.1': Pressure space
- 18.2, 18.2': Pressure space
- 18.3, 18.3': Pressure space
- 18.4, 18.4': Pressure space
- 18.5, 18.5': Pressure space
- 20.1: Control device
- 20.2: Control device
- 20.3: Control device
- 20.4: Control device
- 20.5: Control device
- 22: First pressure line
- 24: Second pressure line
- 26: Ventilation valve
- 28: Ventilation valve
- 30: Exit
- 32: Exit
- 34: Ventilation line
- 34.1: Line portion
- 34.2: Line portion
- 36: Circuit board
- 38: First carrier plate
- 40: Second carrier plate
- 42: Flange surface
- 44: Fastening hole
- 46: Centring sleeve
- 48: Cylinder assembly
- 50: Fastening bolt
- 52: Holding plate
- 54: Fastening bolt
- 56: Control assembly
- 58: Fastening bolt
- 60: Centring projection
- 62: Centring aperture
- 64: Connection housing
- 66: Valve housing
- 68: Holder
- 70: Plug connection
- 72: Plug connection
- 74.1, 74.1': Cylinder housing
- 74.2, 74.2': Cylinder housing
- 74.3, 74.3': Cylinder housing
- 74.4, 74.4': Cylinder housing
- 74.5, 74.5': Cylinder housing
- 76, 76': Hydraulic inlet
- 78, 78': Hydraulic outlet
- 80, 80': Inlet connection
- 82, 82': End connection
- 84: Positioning projection
- 86: Positioning aperture
- 88: Opening
- 90: Stop rail
- 92: Valve body
- 94: Valve seat
- 96: Insert part
- 98: O-ring
- 100: Passage
- 102: Annular groove
- 104: Connecting groove
- 106: Blocking element
- 108: Spring
- 110: Actuator
- 112: Feed axis
- 113: Opening
- 114: Aperture
- 116: Sensor arrangement
- 118: Position detector
- 120: Position encoder
- 122: Aperture
- 124: Fastening bolt
- 126: Seal arrangement
- 128: Contact pin
- 130: Electrical interface
- 132: Plug connection
- 134: Contact pin

## Claims

1. Hydraulic operating apparatus (10) for the operation of actuating elements (12) in a motor vehicle transmission, having a multiplicity of piston-cylinder arrangements (14.1, 14.2, 14.3, 14.4, 14.5) which have in each case one actuating piston (16.1, 16.2, 16.3, 16.4, 16.5) which is operatively connectable to an actuating element (12) and which can be hydraulically acted on a first side and on a second side of the actuating pistons by means of in each case one associated pressure space (18.1, 18.1', 18.2, 18.2', 18.3, 18.3', 18.4, 18.4', 18.5, 18.5'), wherein each piston-cylinder arrangement (14.1, 14.2, 14.3, 14.4, 14.5) is assigned a control device (20.1, 20.2, 20.3, 20.4, 20.5) which permits or prevents an actuating movement of the respective actuating piston (16.1, 16.2, 16.3, 16.4, 16.5) in a first direction or in an opposite, second direction, and wherein the pressure spaces (18.1, 18.2, 18.3, 18.4, 18.5) on the first side of the actuating pistons (16.1, 16.2, 16.3, 16.4, 16.5) are hydraulically connected to one another via a common first pressure line (22), whereas the pressure spaces (18.1', 18.2', 18.3', 18.4', 18.5') on the second side of the actuating pistons (16.1, 16.2, 16.3, 16.4, 16.5) are hydraulically connected to one another via a common second pressure line (24), **characterized in that** to each pressure line (22, 24) is assigned at least one ventilation valve (26, 28) with an exit (30, 32) for air, and the exits (30, 32) of the ventilation valves (26, 28) are connected to a common ventilation line (34).

2. Hydraulic operating apparatus (10) according to Claim 1, **characterized in that** each piston-cylinder arrangement (14.1, 14.2, 14.3, 14.4, 14.5) has two cylinder housings (74.1, 74.1', 74.2, 74.2', 74.3, 74.3', 74.4, 74.4', 74.5, 74.5') which delimit the respective pressure spaces (18.1, 18.1', 18.2, 18.2', 18.3, 18.3', 18.4, 18.4', 18.5, 18.5') and which have in each case one hydraulic inlet (76, 76') and one hydraulic outlet (78, 78') for the pressure space (18.1, 18.1', 18.2, 18.2', 18.3, 18.3', 18.4, 18.4', 18.5, 18.5'), wherein a part of the first pressure line (22) is formed by a series arrangement of cylinder housings (74.1, 74.2, 74.3, 74.4, 74.5) on the first side of the actuating pistons (16.1, 16.2, 16.3, 16.4, 16.5), whereas a part of the second pressure line (24) is formed by a series arrangement of cylinder housings (74.1', 74.2', 74.3', 74.4', 74.5') on the second side of the actuating pistons (16.1, 16.2, 16.3, 16.4, 16.5).

3. Hydraulic operating apparatus (10) according to Claim 2, **characterized in that**, in the series arrangement of cylinder housings (74.1, 74.2, 74.3, 74.4, 74.5; 74.1', 74.2', 74.3', 74.4', 74.5'), the hydraulic inlet (76, 76') of a respective first cylinder housing (74.1, 74.1') forms a common inlet connection (80, 80') for the respective series arrangement, whereas the hydraulic outlet (78, 78') of a respective final cylinder housing (74.5, 74.5') forms a common end connection (82, 82') for the respective series arrangement, wherein, between the hydraulic inlet (76, 76') of the first cylinder housing (74.1, 74.1') and the hydraulic outlet (78, 78') of the final cylinder housing (74.5, 74.5'), the hydraulic outlet (78, 78') of each cylinder housing (74.1, 74.2, 74.3, 74.4; 74.1', 74.2', 74.3', 74.4') is connected, preferably connected by plug connection, to the hydraulic inlet (76, 76') of a subsequent cylinder housing (74.2, 74.3, 74.4, 74.5; 74.2', 74.3', 74.4', 74.5') .

4. Hydraulic operating apparatus (10) according to any of the preceding claims, **characterized in that** the ventilation valve (26, 28) is a disc valve, having a disc-shaped valve body (92) which bears under spring loading against a valve seat (94).

5. Hydraulic operating apparatus (10) according to Claim 4, **characterized in that** the valve seat (94) has a central passage (100), which communicates with the respective pressure line (22, 24), and an annular groove (102) which surrounds the passage (100) and which is connected to the passage (100) via a connecting groove (104), wherein the valve body (92) is composed of a resiliently elastic material, which covers the passage (100), the connecting groove (104) and the annular groove (102), and is capable of lifting off from the annular groove (102).

6. Hydraulic operating apparatus (10) according to any of the preceding claims, **characterized in that** the ventilation valve (26, 28) is arranged at a highest point of the respective pressure line (22, 24).

7. Hydraulic operating apparatus (10) according to Claim 6, where referred back to Claim 3, **characterized in that** the ventilation valve (26, 28) is provided at the common end connection (82, 82').

8. Hydraulic operating apparatus (10) according to any of the preceding claims, **characterized in that** the piston-cylinder arrangements (14.1, 14.2, 14.3, 14.4, 14.5) are mounted on a first carrier plate (38), wherein the ventilation line (34) runs on a side of the first carrier plate (38) which is averted from the piston-cylinder arrangements (14.1, 14.2, 14.3, 14.4, 14.5).

9. Hydraulic operating apparatus (10) according to Claim 8, **characterized in that** the ventilation line (34) is fastened to the first carrier plate (38) on that side of the first carrier plate (38) which is averted from the piston-cylinder arrangements (14.1, 14.2, 14.3, 14.4, 14.5).

10. Hydraulic operating apparatus (10) according to any of the preceding claims, **characterized in that** the ventilation line (34) has at least two line portions (34.1, 34.2), of which at least one line portion (34.1) connects the exits (30, 32) of the ventilation valves (26, 28).

11. Hydraulic operating apparatus (10) according to any of the preceding claims, **characterized in that** the ventilation line (34) has a plug connection (70) at an end side.

12. Hydraulic operating apparatus (10) according to Claim 8, **characterized in that** the first pressure line (22) and the second pressure line (24) have in each case one plug connection (72), which is provided on that side of the first carrier plate (38) which is averted from the piston-cylinder arrangements (14.1, 14.2, 14.3, 14.4, 14.5).

13. Hydraulic operating apparatus (10) according to Claims 11 and 12, **characterized in that** the plug connection (70) of the ventilation line (34) and the plug connections (72) of the pressure lines (22, 24) are arranged at one and the same edge of the first carrier plate (38).

14. Hydraulic operating apparatus (10) according to Claim 8, **characterized in that** the control devices (20.1, 20.2, 20.3, 20.4, 20.5) are arranged on that side of the first carrier plate (38) which is averted from the piston-cylinder arrangements (14.1, 14.2, 14.3, 14.4, 14.5), wherein the ventilation line (34) runs adjacent to the control devices (20.1, 20.2, 20.3, 20.4, 20.5).

15. Hydraulic operating apparatus (10) according to any of the preceding claims, **characterized in that** the control device (20.1, 20.2, 20.3, 20.4, 20.5) is an arresting device which has a blocking element (106), which blocking element is spring-preloaded into a blocking position which prevents a movement of the actuating piston (16.1, 16.2, 16.3, 16.4, 16.5), and which blocking element can be moved by means of an electrically activatable actuator (110) from the blocking position counter to the spring preload into a release position which permits a movement of the actuating piston (16.1, 16.2, 16.3, 16.4, 16.5).

## Patentansprüche

1. Hydraulische Betätigungsvorrichtung (10) für die Betätigung von Stellgliedern (12) in einem Kraftfahrzeuggetriebe, mit einer Mehrzahl von Kolben-Zylinder-Anordnungen (14.1, 14.2, 14.3, 14.4, 14.5), die jeweils einen mit einem Stellglied (12) wirkverbindbaren Stellkolben (16.1, 16.2, 16.3, 16.4, 16.5) aufweisen, der auf einer ersten Seite und einer zweiten Seite über jeweils einen zugeordneten Druckraum (18.1, 18.1', 18.2, 18.2', 18.3, 18.3', 18.4, 18.4', 18.5, 18.5') hydraulisch beaufschlagbar ist, wobei jeder Kolben-Zylinder-Anordnung (14.1, 14.2, 14.3, 14.4, 14.5) eine Steuereinrichtung (20.1, 20.2, 20.3, 20.4, 20.5) zugeordnet ist, die eine Stellbewegung des jeweiligen Stellkolbens (16.1, 16.2, 16.3, 16.4, 16.5) in einer ersten Richtung oder einer entgegengesetzten zweiten Richtung gestattet oder unterbindet, und wobei die Druckräume (18.1, 18.2, 18.3, 18.4, 18.5) auf der ersten Seite der Stellkolben (16.1, 16.2, 16.3, 16.4, 16.5) über eine gemeinsame erste Druckleitung (22) hydraulisch miteinander verbunden sind, während die Druckräume (18.1', 18.2', 18.3', 18.4', 18.5') auf der zweiten Seite der Stellkolben (16.1, 16.2, 16.3, 16.4, 16.5) über eine gemeinsame zweite Druckleitung (24) hydraulisch miteinander verbunden sind, **dadurch gekennzeichnet, dass** jeder Druckleitung (22, 24) wenigstens ein Entlüftungsventil (26, 28) mit einem Abgang (30, 32) für Luft zugeordnet ist und die Abgänge (30, 32) der Entlüftungsventile (26, 28) an eine gemeinsame Entlüftungsleitung (34) angeschlossen sind.

2. Hydraulische Betätigungsvorrichtung (10) nach Anspruch 1, **dadurch gekennzeichnet, dass** jede Kolben-Zylinder-Anordnung (14.1, 14.2, 14.3, 14.4, 14.5) zwei die jeweiligen Druckräume (18.1, 18.1', 18.2, 18.2', 18.3, 18.3', 18.4, 18.4', 18.5, 18.5') begrenzende Zylindergehäuse (74.1, 74.1', 74.2, 74.2', 74.3, 74.3', 74.4, 74.4', 74.5, 74.5') aufweist, welche jeweils einen Hydraulikeingang (76, 76') und einen Hydraulikausgang (78, 78') für den Druckraum (18.1, 18.1', 18.2, 18.2', 18.3, 18.3', 18.4, 18.4', 18.5, 18.5') haben, wobei ein Teil der ersten Druckleitung (22) durch eine Reihenanordnung von Zylindergehäusen (74.1, 74.2, 74.3, 74.4, 74.5) auf der ersten Seite der Stellkolben (16.1, 16.2, 16.3, 16.4, 16.5) gebildet ist, während ein Teil der zweiten Druckleitung (24) durch eine Reihenanordnung von Zylindergehäusen (74.1', 74.2', 74.3', 74.4', 74.5') auf der zweiten Seite der Stellkolben (16.1, 16.2, 16.3, 16.4, 16.5) gebildet ist.

3. Hydraulische Betätigungsvorrichtung (10) nach Anspruch 2, **dadurch gekennzeichnet, dass** bei der Reihenanordnung von Zylindergehäusen (74.1, 74.2, 74.3, 74.4, 74.5; 74.1', 74.2', 74.3', 74.4', 74.5') der Hydraulikeingang (76, 76') eines jeweils ersten Zylindergehäuses (74.1, 74.1') einen gemeinsamen Eingangsanschluss (80, 80') für die jeweilige Reihenanordnung bildet, während der Hydraulikausgang (78, 78') eines jeweils letzten Zylindergehäuses (74.5, 74.5') einen gemeinsamen Endanschluss (82, 82') für die jeweilige Reihenanordnung bildet, wobei zwischen dem Hydraulikeingang (76, 76') des ersten Zylindergehäuses (74.1, 74.1') und dem Hydraulikausgang (78, 78') des letzten Zylindergehäuses (74.5, 74.5') der Hydraulikausgang (78, 78') eines jeden Zylindergehäuses (74.1, 74.2, 74.3, 74.4; 74.1', 74.2', 74.3', 74.4') mit dem Hydraulikeingang (76, 76') eines nachfolgenden Zylindergehäuses (74.2, 74.3, 74.4, 74.5; 74.2', 74.3', 74.4', 74.5') verbunden, vorzugsweise steckverbunden ist.

4. Hydraulische Betätigungsvorrichtung (10) nach einem der vorhergehenden Ansprüche, **dadurch gekennzeichnet, dass** es sich bei dem Entlüftungsventil (26, 28) um ein Tellerventil handelt, mit einem tellerförmigen Ventilkörper (92), der federnd gegen einen Ventilsitz (94) anliegt.

5. Hydraulische Betätigungsvorrichtung (10) nach Anspruch 4, **dadurch gekennzeichnet, dass** der Ventilsitz (94) einen mit der jeweiligen Druckleitung (22, 24) kommunizierenden zentralen Durchgang (100) und eine den Durchgang (100) umgebende Ringnut (102) hat, die mit dem Durchgang (100) über eine Verbindungsnut (104) verbunden ist, wobei der Ventilkörper (92) aus einem gummielastischen Material besteht, das den Durchgang (100), die Verbindungsnut (104) und die Ringnut (102) überdeckt sowie von der Ringnut (102) abzuheben vermag.

6. Hydraulische Betätigungsvorrichtung (10) nach einem der vorhergehenden Ansprüche, **dadurch gekennzeichnet, dass** das Entlüftungsventil (26, 28) an einem höchsten Punkt der jeweiligen Druckleitung (22, 24) angeordnet ist.

7. Hydraulische Betätigungsvorrichtung (10) nach Anspruch 6, soweit auf den Anspruch 3 zurückbezogen, **dadurch gekennzeichnet, dass** das Entlüftungsventil (26, 28) am gemeinsamen Endanschluss (82, 82') vorgesehen ist.

8. Hydraulische Betätigungsvorrichtung (10) nach einem der vorhergehenden Ansprüche, **dadurch gekennzeichnet, dass** die Kolben-Zylinder-Anordnungen (14.1, 14.2, 14.3, 14.4, 14.5) auf einer ersten Trägerplatte (38) montiert sind, wobei die Entlüftungsleitung (34) auf einer von den Kolben-Zylinder-Anordnungen (14.1, 14.2, 14.3, 14.4, 14.5) abgewandten Seite der ersten Trägerplatte (38) verläuft.

9. Hydraulische Betätigungsvorrichtung (10) nach Anspruch 8, **dadurch gekennzeichnet, dass** die Entlüftungsleitung (34) auf der von den Kolben-Zylinder-Anordnungen (14.1, 14.2, 14.3, 14.4, 14.5) abgewandten Seite der ersten Trägerplatte (38) an der ersten Trägerplatte (38) befestigt ist.

10. Hydraulische Betätigungsvorrichtung (10) nach einem der vorhergehenden Ansprüche, **dadurch gekennzeichnet, dass** die Entlüftungsleitung (34) wenigstens zwei Leitungsabschnitte (34.1, 34.2) aufweist, von denen mindestens ein Leitungsabschnitt (34.1) die Abgänge (30, 32) der Entlüftungsventile (26, 28) verbindet.

11. Hydraulische Betätigungsvorrichtung (10) nach einem der vorhergehenden Ansprüche, **dadurch gekennzeichnet, dass** die Entlüftungsleitung (34) endseitig einen Steckanschluss (70) aufweist.

12. Hydraulische Betätigungsvorrichtung (10) nach Anspruch 8, **dadurch gekennzeichnet, dass** die erste Druckleitung (22) und die zweite Druckleitung (24) jeweils einen Steckanschluss (72) aufweisen, der auf der von den Kolben-Zylinder-Anordnungen (14.1, 14.2, 14.3, 14.4, 14.5) abgewandten Seite der ersten Trägerplatte (38) vorgesehen ist.

13. Hydraulische Betätigungsvorrichtung (10) nach den Ansprüchen 11 und 12, **dadurch gekennzeichnet, dass** der Steckanschluss (70) der Entlüftungsleitung (34) und die Steckanschlüsse (72) der Druckleitungen (22, 24) an ein und demselben Rand der ersten Trägerplatte (38) angeordnet sind.

14. Hydraulische Betätigungsvorrichtung (10) nach Anspruch 8, **dadurch gekennzeichnet, dass** die Steuereinrichtungen (20.1, 20.2, 20.3, 20.4, 20.5) auf der von den Kolben-Zylinder-Anordnungen (14.1, 14.2, 14.3, 14.4, 14.5) abgewandten Seite der ersten Trägerplatte (38) angeordnet sind, wobei die Entlüftungsleitung (34) neben den Steuereinrichtungen (20.1, 20.2, 20.3, 20.4, 20.5) verläuft.

15. Hydraulische Betätigungsvorrichtung (10) nach einem der vorhergehenden Ansprüche, **dadurch gekennzeichnet, dass** es sich bei der Steuereinrichtung (20.1, 20.2, 20.3, 20.4, 20.5) um eine Rastiereinrichtung handelt, die ein Sperrelement (106) aufweist, das in eine eine Bewegung des Stellkolbens (16.1, 16.2, 16.3, 16.4, 16.5) verhindernde Sperrstellung federvorgespannt ist und welches mittels eines elektrisch ansteuerbaren Aktuators (110) von der Sperrstellung gegen die Federvorspannung in eine eine Bewegung des Stellkolbens (16.1, 16.2, 16.3, 16.4, 16.5) zulassende Lösestellung bewegbar ist.

## Revendications

1. Appareil de fonctionnement hydraulique (10) pour le fonctionnement d'éléments d'actionnement (12) dans une transmission de véhicule à moteur, ayant une multiplicité d'agencements piston-cylindre (14.1, 14.2, 14.3, 14.4, 14.5) qui ont, dans chaque cas, un piston d'actionnement (16.1, 16.2, 16.3, 16.4, 16.5) qui est fonctionnellement raccordable à un élément d'actionnement (12) et sur lequel il est possible d'agir hydrauliquement sur un premier côté et sur un second côté des pistons d'actionnement au moyen, dans chaque cas, d'un espace de pression associé (18.1, 18.1', 18.2, 18.2', 18.3, 18.3', 18.4, 18.4', 18.5, 18.5'), dans lequel, à chaque agencement piston-cylindre (14.1, 14.2, 14.3, 14.4, 14.5), est attribué un dispositif de commande (20.1, 20.2, 20.3, 20.4, 20.5) qui permet ou empêche un mouvement d'actionnement du piston d'actionnement respectif (16.1, 16.2, 16.3, 16.4, 16.5) dans une première direction ou dans une seconde direction opposée, et dans lequel les espaces de pression (18.1, 18.2, 18.3, 18.4, 18.5) sur le premier côté des pistons d'actionnement (16.1, 16.2, 16.3, 16.4, 16.5) sont hydrauliquement raccordés les uns aux autres par l'intermédiaire d'une première conduite de pression commune (22), alors que les espaces de pression (18.1', 18.2', 18.3', 18.4', 18.5') sur le second côté des pistons d'actionnement (16.1, 16.2, 16.3, 16.4, 16.5) sont hydrauliquement raccordés les uns aux autres par l'intermédiaire d'une seconde conduite de pression commune (24), **caractérisé en ce que**, à chaque conduite de pression (22, 24), est attribuée au moins une soupape de ventilation (26, 28) avec un trou d'évacuation (30, 32) pour de l'air, et les trous d'évacuation (30, 32) des soupapes de ventilation (26, 28) sont raccordées à une conduite de ventilation commune (34).

2. Appareil de fonctionnement hydraulique (10) selon la revendication 1, **caractérisé en ce que** chaque agencement piston-cylindre (14.1, 14.2, 14.3, 14.4, 14.5) a deux logements de cylindre (74.1, 74.1', 74.2, 74.2', 74.3, 74.3', 74.4, 74.4', 74.5, 74.5') qui délimitent les espaces de pression respectifs (18.1, 18.1', 18.2, 18.2', 18.3, 18.3', 18.4, 18.4', 18.5, 18.5') et qui ont dans chaque cas un orifice d'entrée hydraulique (76, 76') et un orifice de sortie hydraulique (78, 78') pour l'espace de pression (18.1, 18.1', 18.2, 18.2', 18.3, 18.3', 18.4, 18.4', 18.5, 18.5'), dans lequel une partie de la première conduite de pression (22) est formée par un agencement en série de logements de cylindre (74.1, 74.2, 74.3, 74.4, 74.5) sur le premier côté des pistons d'actionnement (16.1, 16.2, 16.3, 16.4, 16.5), alors qu'une partie de la seconde conduite de pression (24) est formée par un agencement en série de logements de cylindre (74.1', 74.2', 74.3', 74.4', 74.5') sur le second côté des pistons d'actionnement (16.1, 16.2, 16.3, 16.4, 16.5).

3. Appareil de fonctionnement hydraulique (10) selon la revendication 2, **caractérisé en ce que**, dans l'agencement en série de logements de cylindre (74.1, 74.2, 74.3, 74.4, 74.5 ; 74.1', 74.2', 74.3', 74.4', 74.5'), l'orifice d'entrée hydraulique (76, 76') d'un premier logement de cylindre respectif (74.1, 74.1') forme un raccord d'orifice d'entrée commun (80, 80') pour l'agencement en série respectif, alors que l'orifice de sortie hydraulique (78, 78') d'un logement de cylindre final respectif (74.5, 74.5') forme un raccord d'extrémité commun (82, 82') pour l'agencement en série respectif, dans lequel, entre l'orifice d'entrée hydraulique (76, 76') du premier logement de cylindre (74.1, 74.1') et l'orifice de sortie hydraulique (78, 78') du logement de cylindre final (74.5, 74.5'), l'orifice de sortie hydraulique (78, 78') de chaque logement de cylindre (74.1, 74.2, 74.3, 74.4 ; 74.1', 74.2', 74.3', 74.4') est raccordé, de préférence raccordé par raccord mâle, à l'orifice d'entrée hydraulique (76, 76') d'un logement de cylindre subséquent (74.2, 74.3, 74.4, 74.5 ; 74.2', 74.3', 74.4', 74.5').

4. Appareil de fonctionnement hydraulique (10) selon l'une quelconque des revendications précédentes, **caractérisé en ce que** la soupape de ventilation (26, 28) est une soupape à disque, ayant un corps de soupape en forme de disque (92) qui appuie, sous chargement par ressort, contre un siège de soupape (94).

5. Appareil de fonctionnement hydraulique (10) selon la revendication 4, **caractérisé en ce que** le siège de soupape (94) a un passage central (100), qui communique avec la conduite de pression respective (22, 24), et une rainure annulaire (102) qui entoure le passage (100) et qui est raccordée au passage (100) par l'intermédiaire d'une rainure de raccordement (104), dans lequel le corps de soupape (92) est composé d'un matériau élastique de façon résiliente, qui couvre le passage (100), la rainure de raccordement (104) et la rainure annulaire (102), et est capable de se lever à partir de la rainure annulaire (102).

6. Appareil de fonctionnement hydraulique (10) selon l'une quelconque des revendications précédentes, **caractérisé en ce que** la soupape de ventilation (26, 28) est agencée à un point le plus haut de la conduite de pression respective (22, 24).

7. Appareil de fonctionnement hydraulique (10) selon la revendication 6, lorsqu'elle fait référence à la revendication 3, **caractérisé en ce que** la soupape de ventilation (26, 28) est prévue au niveau du raccord d'extrémité commun (82, 82').

8. Appareil de fonctionnement hydraulique (10) selon l'une quelconque des revendications précédentes, **caractérisé en ce que** les agencements piston-cylindre (14.1, 14.2, 14.3, 14.4, 14.5) sont montés sur une première plaque support (38), dans lequel la conduite de ventilation (34) se trouve sur un côté de la première plaque support (38) qui est détourné par rapport aux agencements piston-cylindre (14.1, 14.2, 14.3, 14.4, 14.5).

9. Appareil de fonctionnement hydraulique (10) selon la revendication 8, **caractérisé en ce que** la conduite de ventilation (34) est fixée à la première plaque support (38) sur le côté de la première plaque support (38) qui est détourné par rapport aux agencements piston-cylindre (14.1, 14.2, 14.3, 14.4, 14.5).

10. Appareil de fonctionnement hydraulique (10) selon l'une quelconque des revendications précédentes, **caractérisé en ce que** la conduite de ventilation (34) a au moins deux portions de conduite (34.1, 34.2), dont au moins une portion de conduite (34.1) raccorde les trous d'évacuation (30, 32) des soupapes de ventilation (26, 28).

11. Appareil de fonctionnement hydraulique (10) selon l'une quelconque des revendications précédentes, **caractérisé en ce que** la conduite de ventilation (34) a un raccord mâle (70) sur un côté d'extrémité.

12. Appareil de fonctionnement hydraulique (10) selon la revendication 8, **caractérisé en ce que** la première conduite de pression (22) et la seconde conduite de pression (24) ont, dans chaque cas, un raccord mâle (72), qui est prévu sur le côté de la première plaque support (38) qui est détourné par rapport aux agencements piston-cylindre (14.1, 14.2, 14.3, 14.4, 14.5).

13. Appareil de fonctionnement hydraulique (10) selon les revendications 11 et 12, **caractérisé en ce que** le raccord mâle (70) de la conduite de ventilation (34) et les raccords mâles (72) des conduites de pression (22, 24) sont agencés au niveau d'un et du même bord de la première plaque support (38).

14. Appareil de fonctionnement hydraulique (10) selon la revendication 8, **caractérisé en ce que** les dispositifs de commande (20.1, 20.2, 20.3, 20.4, 20.5) sont agencés sur le côté de la première plaque support (38) qui est détourné par rapport aux agencements piston-cylindre (14.1, 14.2, 14.3, 14.4, 14.5), dans lequel la conduite de ventilation (34) se trouve de façon adjacente aux dispositifs de commande (20.1, 20.2, 20.3, 20.4, 20.5).

15. Appareil de fonctionnement hydraulique (10) selon l'une quelconque des revendications précédentes, **caractérisé en ce que** le dispositif de commande (20.1, 20.2, 20.3, 20.4, 20.5) est un dispositif d'arrêt qui a un élément de blocage (106), lequel élément de blocage est préchargé par ressort dans une position de blocage qui empêche un mouvement du piston d'actionnement (16.1, 16.2, 16.3, 16.4, 16.5), et lequel élément de blocage peut être mis en mouvement au moyen d'un actionneur électriquement activable (110) depuis la position de blocage en opposition à la précharge de ressort jusque dans une position de libération qui permet un mouvement du piston d'actionnement (16.1, 16.2, 16.3, 16.4, 16.5).
